(19) Europäisches Patentamt
European Patent Office
Office européen des brevets

(11) EP 1 361 260 B1

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(51) Int Cl.$^7$: **C09J 151/00**

(21) Anmeldenummer: **03009486.6**

(22) Anmeldetag: **26.04.2003**

(54) **Verwendung von Makromonomeren für die Herstellung von Acrylathaftklebemassen**

Use of macromonomers for the production of acrylate adhesives

Utilisation de macromonomères pour la préparation d'adhésifs acrylates

(84) Benannte Vertragsstaaten:
**DE ES FR GB IT**

(30) Priorität: **11.05.2002 DE 10221093**

(43) Veröffentlichungstag der Anmeldung:
**12.11.2003 Patentblatt 2003/46**

(73) Patentinhaber: **tesa AG**
**20253 Hamburg (DE)**

(72) Erfinder:
- **Husemann, Marc**
**22605 Hamburg (DE)**
- **Zöllner, Stephan**
**22043 Hamburg (DE)**

(56) Entgegenhaltungen:
**EP-A- 1 312 658**
**WO-A-02/02709**
**US-A- 4 551 388**
**US-A- 4 554 324**

Bemerkungen:
Die Akte enthält technische Angaben, die nach dem Eingang der Anmeldung eingereicht wurden und die nicht in dieser Patentschrift enthalten sind.

EP 1 361 260 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft die Verwendung bestimmter Makromonomere als Comonomere bei der Herstellung von orientierten Polyacrylathaftklebemassen.

Durch immer größere Umweltauflagen und Kostendruck besteht zur Zeit der Trend zur Herstellung von Haftklebemassen ohne oder nur mit geringen Mengen an Lösemittel. Dieses Ziel kann am einfachsten durch die Heißschmelz-Technologie (Hotmelt-Technologie) verwirklicht werden. Ein weiterer Vorteil ist die Produktionszeitverkürzung: In Hotmelt-Anlagen können Klebemassen bedeutend schneller auf Träger oder Trennpapier laminiert werden; somit kann Zeit und Geld eingespart werden.

Die Hotmelt-Technologie stellt aber immer höhere Anforderungen an die Klebemassen. Für hochwertige industrielle Anwendungen werden insbesondere Polyacrylate bevorzugt, da diese transparent und witterungsstabil sind.

Zur Herstellung von Acrylathotmelts werden konventionell Acrylatmonomere in Lösung polymerisiert und anschließend das Lösemittel in einem Aufkonzentrationsprozess im Extruder entfernt.

Für die Herstellung von sehr hochscherfesten Massen werden sehr häufig Makromonomere polymerisiert, die z.B. durch Phasenseparierung die innere Kohäsion der Haftklebemasse steigern. So wurden z.B. in der US 3,786,116 zum ersten Mal Makromonomere copolymerisiert.

In der US 4,551,388 werden mit einer Methacrylat-Funktion terminierte Polystyrole beschrieben, die mit verschiedenen Acrylatcomonomeren polymerisiert werden. Diese Polymerisate werden als Haftklebemassen eingesetzt. Kurze Zeit später wurden solche Makromonomere von der Fa. Sartomer kommerzialisiert und unter den Handelsnamen Chemlink® 4500 vertrieben. Im Technical Bullentin der Fa. Sartomer wurde z.B. 1984 bereits die Copolymerisation von Chemlink® 4500 mit verschiedenen Acrylatmonomeren zur Herstellung von Acrylatschmelzhaftklebern empfohlen. In der US 4,554,324 wurden diese Makromonomere zur Herstellung von hochscherfesten Acrylathaftklebemassen verwendet.

Eine weitere bedeutende Eigenschaft für die Beschichtung von Acrylatmassen aus der Schmelze ist das Phänomen der Orientierung der Polymerketten; insbesondere für höhermolekulare Polyacrylate. Durch die Orientierung kann es zu besonderen Eigenschaften der entsprechenden Polymere kommen, die sich im allgemeinen in einer zumdest planaren Anisotropie der Eigenschaften äußern.

Einige generelle Beispiele für durch den Orientierungsgrad beeinflussbare Eigenschaften von Polymeren und/oder der daraus hergestellten Kunststoffe sind deren Festigkeit bzw. Steifigkeit, deren thermische Leitfähigkeit, deren thermische Stabilität sowie deren anisotropes Verhalten bezüglich der Durchlässigkeit für Gase und Flüssigkeiten (vgl. beispielsweise I.M. Ward, Structure and Properties.of Oriented Polymers, 2$^{nd}$ ed. 1997, Kluwer, Dortrecht).

Die oben erwähnte Orientierung der Makromoleküle spielt ebenfalls eine bedeutende Rolle für die klebtechnisch relevanten Eigenschaften von Haftklebemassen; so wurden für orientierte Haftklebemassen ebenfalls interessante Eigenschaften gefunden.

Bereits in der US 5,866,249 wurde die Generierung einer partiellen Orientierung in teilkristallinen kautschukbasierenden Haftklebemassen beschrieben. Durch die anisotropen Klebeigenschaften konnten innovative Haftklebeanwendungen definiert werden.

In der DE 100 34 069.5 wurde ein Verfahren zur Orientierung von Acrylathotmelts beschrieben, in dem die beschriebenen Acrylathaftklebemassen kurz nach der Beschichtung aus der Düse auf einer Walze mit actinischer Strahlung vernetzt wurden.

In der DE 100 52 955.0 wurde ein anwendungsspezifischer Vorteil dieser orientierten Acrylathotmelts beschrieben. Hier wurde gefunden, dass insbesondere orientierte Acrylathotmelts als Haftklebebänder eine verbesserte Stanzbarkeit aufweisen.

Nachteilig in diesen oben beschriebenen Verfahren ist, dass die Orientierung über einen längeren Zeitraum durch Strukturrelaxation langsam abnimmt.

Aufgabe der Erfindung ist es daher, orientierte Acrylathaftklebemassen zur Verfügung zu stellen, bei denen die Orientierung über einen längeren Zeitraum erhalten bleibt, welche also den Nachteil der Strukturrelaxation nicht oder nur in vermindertem Maße aufweisen, aber die anwendungsrelevanten Vorteile von Acrylathaftklebemassen dabei nicht verlieren. Aufgabe ist es weiterhin, ein Verfahren zur Herstellung solcher orientierter Haftklebemassen anzubieten.

Gelöst wird die Aufgabe in nicht vorhersehbarer Weise, indem bei der Polymerisation von Acrylathaftklebemassen Makromonomere zu der zu polymerisierenden Monomermischung gegeben werden, welche neben einer polymerisierbaren Struktureinheit eine solche aufweisen, welche mit dem Polyacrylat nicht verträglich ist, und wenn derartig hergestellte Polymere zur Herstellung orientierter Haftklebemassen herangezogen werden. In überraschender Weise führt diese Vorgehensweise zu dem Ergebnis, dass die Orientierung der Haftklebemasse zeitlich länger erhalten bleibt.

Dementsprechend betrifft der Hauptanspruch die Verwendung von Makromonomeren, welche

- eine Glasübergangstemperatur von mindestens 20 °C aufweisen,
- zumindest eine oligomere und/oder polymere Struktureinheit aufweisen, welche mit Polyacrylaten nicht verträglich ist, und
- zumindest eine polymerisierbare Doppelbindung in Form einer Vinyl-, Acrylat- und/oder Methacrylateinheit aufweisen,

als Comonomere bei der Herstellung von orientierten Polyacrylathaftklebemassen.
Insbesondere soll die polymerisierbare Doppelbindung für eine radikalische und/oder für eine anionische Polymerisation zugänglich sein.
Die Nichtverträglichkeit mit ("konventionellen") Polyacrylaten äußert sch dabei darin, dass der durch die oligomere oder polymere Struktureinheit gebildete Rest sich nicht mit der Polyacrylatmasse (also mit den Polyacrylat- bzw. Polynriethacrylathauptketten) mischt, so dass es - ähnlich wie bei den hydrophoben Enden von amphiphilen Verbindungen während der Micellenbildung in wässriger Umgebung - zur Ausbildung des Phänomens der Phasenseparierung, insbesondere der Mikrophasenseparierung, kommt.
Ohne die Zugabe der erfindungsgemäß verwendeten Monomere in die zu polymerisierende Monomermischung sollte eine derart hergestellte Polyacrylatmasse bevorzugt in homogener Form vorliegen.
Für die Mikrophasenseparierung sollen die oligomeren bzw. polymeren Reste nicht in die Polyacrylatmasse einpolymerisiert werden. Es ist daher bevorzugt so vorzugehen, dass die oligomere bzw. polymere Struktureinheit (unter herkömmlichen Polymerisationsbedingungen, also ohne Vorgabe drastischer Reaktionsparameter) inert gegen eine radikalische Polymerisation ist. In einer weiteren vorteilhaften Vorgehensweise ist die oligomere bzw. polymere Struktureinheit (unter herkömmlichen Reaktionsbedingungen) inert gegen eine anionische Reaktion; die oligomere bzw. polymere Struktureinheit kann auch so gewählt werden, dass sie weder für eine radikalische noch für eine anionische Polymerisation zugänglich ist.
In vorteilhafter Weise lässt sich die Orientierung der Haftklebemasse über deren Brechungsindex quantifizieren. Vorteilhaft weisen die orientierten Polyacrylathaftklebemassen eine Vorzugsrichtung derart auf, dass der in Vorzugsrichtung gemessene Brechungsindex $n_{MD}$ größer ist als der in einer Richtung senkrecht zur Vorzugsrichtung gemessene Brechungsindex $n_{CD}$, wobei die Differenz $\Delta n = n_{MD} - n_{CD}$ bevorzugt mindestens $1 \cdot 10^{-6}$ beträgt.
Die Messung der Brechungsindizes erfolgt dabei nach der in Test B, Version 2 beschriebenen Methode bestimmt.
Neben der Messung der Orientierung durch die Bestimmung des $\Delta n$ Wertes (s. Test B) eignet sich ebenfalls die Betrachtung des Rückschrumpfverhaltens (Bestimmung des Rückschrumpfes) der Haftklebemassen im freien Film zur Quantifizierung der Orientierung und der anisotropen Eigenschaften.
Vorteilhaft zeigen die orientierten Haftklebemassen unmittelbar nach ihrer Herstellung ein Rückschrumpfverhalten von mindestens 3 % im freien Film, bestimmt gemäß Test D. Dazu werden die Haftklebemassen unmittelbar (bevorzugt innerhalb eines Zeitraumes < 5 Minuten) nach ihrer Beschichtung vernetzt, konfektioniert und vermessen.
Gewünscht ist ein zeitlich langandauernder Erhalt der Orientierung. Vorteilhaft weisen die orientierten Haftklebemassen noch 3 Monate nach ihrer Herstellung - bei einer zwischenzeitlichen Lagerung bei 23 °C und 50 % rel. Luftfeuchte - ein Rückschrumpfverhalten von mindestens 3 % im freien Film auf, bestimmt gemäß Test D.
Für diese Messung werden die Haftklebemassen auf Trennpapier beschichtet und in diesem Zustande 3 Monate entsprechend der oben genannten Bedingungen gelagert. Nach drei Monaten werden die Haftklebemassen wie unter Test D beschrieben konfektioniert und vermessen.
In sehr vorteilhafter Ausführung des erfindungsgemäßen Verwendung resultieren Haftklebemassen, bei denen das direkt nach der Beschichtung gemessene Rückschrumpfverhalten mindestens 5 %, bevorzugter mindestens 10 %, noch bevorzugter mindestens 25 % beträgt.
Noch vorteilhafter liegen entsprechend der erfindungsgemäßen Verwendung Haftklebemassen vor, die nach einer Zeitdauer von drei Monaten nach der Herstellung ein Rückschrumpfverhalten von mindestens 5 %, bevorzugter von mindestens 10 %, noch bevorzugter von mindestens 25 % aufweisen.
Die zu polymerisierende Monomermischung wird vorteilhaft dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.
Sehr bevorzugt kann eine Monomerzusammensetzung wie folgt gewählt werden:

(A) Acrylsäureester und/oder Methacrylsäureester der allgemeinen Formel $CH_2=CH(R^1)(COOR^2)$ , wobei $R^1$ als H und/oder $CH_3$ und $R^2$ als linearer, verzweigter, cyclischer oder polycyclischer Alkylrest mit bevorzugt 1 bis 20 C-Atomen gewählt wird,
(B) Makromonomere entsprechend des Hauptanspruchs, also solche, welche

- eine Glasübergangstemperatur von mindestens 20 °C aufweisen,
- zumindest eine oligomere und/oder polymere Struktureinheit aufweisen, welche mit Polyacrylaten nicht verträglich ist, und
- zumindest eine polymerisierbare Doppelbindung in Form einer Vinyl-, Acrylat- und/oder Methacrylateinheit aufweisen,

(C) gegebenenfalls weitere funktionelle Monomere, welche zumindest eine Vinyl-, Acrylat- und/oder Methacrylatgruppe besitzen.

Besonders vorteilhaft werden dabei folgende Gewichtsanteile, bezogen auf die gesamte Monomermischung, eingesetzt:
30 bis 98 Gew.-% (A), 2 bis 40 Gew.-% (B), bis zu 30 Gew.-% (C), wobei die Zusammensetzung derart gewählt wird, dass sich die Gewichtsanteile zu 100 Gew.-% oder zu einem kleineren Wert addieren, wobei im zweiten Falle weitere Monomere zugegeben werden.
Die Zusammensetzung und der prozentuale Anteil der Makromonomere (B) wird derart gewählt, dass nach der Copolymerisation mit (A) und optional (C) eine Mikrophasenseparierung eintritt, wobei sich bevorzugt Domänen durch die polymeren Einheiten der Makromonomere (B) ausbilden, die eine statische Glasübergangstemperatur von größer 20 °C aufweisen, und wobei die Polyacrylathauptkette eine statische Glasübergangstemperatur von bevorzugt kleiner 10 °C besitzt. Dabei ist es von Vorteil, wenn in einer Polymerkette statistisch 1,5 bis 2,5 Seitenketten auf Basis einpolymerisierter Makromonomere enthalten sind.

Eine entsprechend der erfindungsgemäßen Verwendung besonders vorteilhafte Haftklebemasse ist eine solche, welche durch radikalische oder anionische Polymerisation erhältlich ist, enthaltend ein Polymer basierend auf eine Polymermischung aus zumindest den folgenden Komponenten
Acrylsäureester und/oder Methacrylsäureester zu 30 bis 98 Gew.-% als Monomere gemäß Gruppe (A); Vinyl-, Acrylat-. oder Methacrylatterminierte Makromonomere mit einer Glasübergangstemperatur von mindestens 20 °C zu 2 bis 40 Gew.-% als Monomere gemäß Gruppe (B) und funktionelle Monomere mit zumindest einer Vinyl-, Acrylat- oder Methacrylatgruppe bis zu 30 Gew.-% als Monomere gemäß Gruppe (C), alle Gew.-%-Angaben bezogen auf die Monomermischung, wobei
die Haftklebemasse mikrophasensepariert ist und eine Vorzugsrichtung aufweist, quantifiziert über das Rückschrumpfverhalten der Haftklebemasse nach Test D, welche direkt nach der Beschichtung bei einem Wert von mindestens 3 % liegt und auch nach drei Monaten noch einen Wert von mindestens 3 % besitzt.

Vorteilhaft einzusetzende Monomere entsprechend der Gruppe (A) sind beispielsweise Acryl- und/oder Methacrylsäureester mit Alkylresten aus 4 bis 14 C-Atomen, bevorzugt 4 bis 9 C-Atomen. Als spezifische Beispiele, ohne sich hierdurch unnötig beschränken zu wollen, seien genannt:
Methylacrylat, Ethylacrylat, n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, die entsprechenden Methacrylate, jeweils die verzweigten Isomere der Acrylate und/oder Methacrylate, wie z.B. Isobutylacrylat, 2-Ethylhexylacrylat, 2-Ethylhexylmethacrylat, Isooctylacrylat, Isooctylmethacrylat.
Weitere für die Gruppe (A) einsetzbare Verbindungsklassen sind monofunktionelle Acrylate und/oder Methacrylate von überbrückten Cycloalkoholen, vorteilhaft bestehend aus mindestens 6 C-Atomen. Die Cycloalkohole können dabei substituiert sein, beispielsweise durch C1- bis C6-Alkylgruppen, Halogene oder Cyanogruppen. Spezifische Beispiele sind Cyclohexylmethacrylat, Isobornylacrylat, Isobornylmethacrylat, 3,5-Dimethyladamantylacrylat.

Im Sinne der Gruppe der Makromonomere (B) werden Monomere eingesetzt, die eine statische Glasübergangstemperatur von größer 20°C aufweisen und mit konventionellen Poly(meth)acrylaten nicht mischbar sind.
Das Makromonomer besteht bevorzugt zumindest aus einer oligomeren oder polymeren Struktureinheit, die sich unter Bedingungen einer normalen Copolymerisationsreaktion inert bezüglich dieser Reaktion verhält, und zumindest aus einer Vinyl-, Acrylat-, oder Methacrylateinheit, die mit den Monomeren (A) und optional (C) copolymerisiert wird.
Das mittlere Molekulargewicht der oligomeren bzw. polymeren Einheit liegt bevorzugt zwischen 2.000 und 40.000 g/mol. Die oligomeren bzw. polymeren Einheiten können aus Homopolymeren oder Copolymeren bestehen.
Beispiele für Verbindungen, auf welche die oligomere bzw. polymere Einheit der Makromonomere (B) bevorzugt zurückzuführen ist (Monomere, welche zur Herstellung der oligomeren bzw. polymeren Einheit bevorzugt dienen), sind tert.-Butylacrylat, Isobornylacrylat, Adamantylacrylat, tert.-Butylmethacrylat, Isobornylmethacrylat, Adamantylmethacrylat, Methylmethacrylat, Ethylmethacrylat, Propylmethacrylat, Isopropylmethacrylat, n-Butylmethacrylat, Styrol, α-Methylstyrol, Acrylsäure, 4-Vinylpyridin, N-Vinylphthalimid, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Cyclohexylmethacrylat. Diese Aufzählung ist nicht abschließend zu verstehen.
Weitere geeignete Monomere sind z.B. dem Handbook of Polymers, CRC Series, zu entnehmen.

In einer im erfinderischen Sinne sehr bevorzugten Ausführungsform werden als Makromonomere (B) Polystyrol-, Poly-α-methylstyrol-, und Polymethacrylatterminierte Polymere, welche zudem mit Acrylat- oder Methacrylatgruppen aufweisen, eingesetzt. Das mittlere Molekulargewicht dieser Verbindungen liegt bevorzugt zwischen 5.000 und 30.000 g/mol.
Solche Makromonomere können vorteilhaft etwa im Sinne der in Analogie zur US 4,551,388 genannten Moleküle des allgemeinen Typs

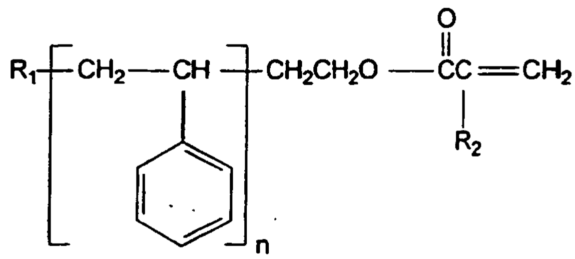

gewählt werden, wobei $R_2$ = H oder $CH_3$ ist. $R_1$ ist ein vom Polymerisationsinitiator verbleibender Rest, bevorzugt beispielsweise

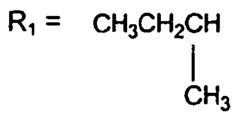

Derartige Makromonomere werden beispielsweise unter dem Handelsnamen Chemlink® 4500 (Sartomer) [$R_1 = CH_3CH_2CH(CH_3)$; $R_2 = CH_3$] oder Methacromer® PS12 (Polymer Chemistry Innovations) [$R_1$ ohne nähere Spezifikation, $R_2 = CH_3$] kommerziell vertrieben.

Als Monomere (C) werden in einer bevorzugten Ausführung Verbindungen eingesetzt, die polare Gruppen wie Carboxyl, Sulfon- und Phosphonsäure, Hydroxy-, Lactam und Lacton, N-substituiertes Amid, N-substituiertes Amin, Carbamat-, Epoxy-, Thiol-, Ether, Alkoxy-. Cyan- oder ähnliches tragen.

Moderate basische Monomere (C) sind beispielsweise im Sinne einer nichtabschließenden Aufzählung N, N-Dialkyl substituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Gycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure.

In einer weiteren sehr bevorzugten Ausführung werden als Monomere (C) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

In einer weiteren Ausführung werden zu den beschriebenen Comonomeren (C) weitere Comonomere verwendet, die eine statische Glasübergangstemperatur von größer 20°C besitzen, aber die statische Glasübergangstemperatur der Polyacrylathauptkette nicht auf größer 10 °C ansteigen lassen.

Als Komponenten eigenen sich aromatische Vinylverbindungen, wie z.B. Styrol, wobei bevorzugt die aromatischen Kerne aus $C_4$- bis $C_{18}$-Einheiten bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus derartigen Monomeren.

In einer weiteren sehr bevorzugten Auslegung werden copolymerisierbare UV-Photoinitiatoren mit einer copolymerisierbaren Doppelbindung eingesetzt. Die Photoinitiatoren initiieren und/oder unterstützen eine Vernetzung der Haftklebemaassen bei Einstrahlung actinischer Strahlung und können im Sinne der Monomere (B), der Monomere

(C) und/oder anderer Monomergruppen gewählt werden.
Als Photoinitiatoren sind Norrish I und II Photoinitiatoren geeignet. Beispiele sind z.B. Benzoinacrylat und acrylierte Benzophenone (z.B. Ebecryl P 36® der Firma UCB).
Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London gegeben.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet. Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azobis-(cyclohexancarbonsäurenitril) (Vazo 88™ der Fa. DuPont) oder Azodisobutyronitril (AIBN) verwendet.

Die mittleren Molekulargewichte $M_w$ der bei der radikalischen Polymerisation entstehenden Haftklebemassen werden sehr bevorzugt derart gewählt, dass sie in einem Bereich von 200.000 bis 4.000.000 g/mol liegen; speziell für die weitere Verwendung als Schmelzhaftkleber werden Haftklebemassen mit mittleren Molekulargewichten $M_w$ von 600.000 bis 800.000 g/mol hergestellt. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Zur Herstellung von Polyacrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

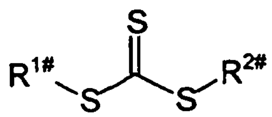 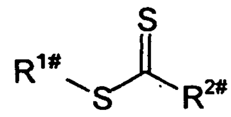

(I #) (II #)

worin $R^{1\#}$ und $R^{2\#}$ unabhängig voneinander gewählt oder gleich sind

- verzweigte und unverzweigte $C_1$- bis $C_{18}$-Alkylreste; $C_3$- bis $C_{18}$-Alkenylreste; $C_3$-bis $C_{18}$-Alkinylreste;
- $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanatogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff

darstellen.

Kontrollreagenzien des Typs (I #) bestehen bevorzugt aus folgenden weiter eingeschränkten Verbindungen: Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.
Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.

Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.
Als $C_3$-$C_{12}$-Cycloalkylreste dienen beispielsweise Cyclopropyl, Cyclopentyl, Cyclohexyl oder Trimethylcyclohexyl.
Als $C_6$-$C_{18}$-Arylreste dienen beispielsweise Phenyl, Naphthyl, Benzyl, 4-tert.-Butylbenzyl- oder weitere substituierte Phenylreste, wie z.B. Ethylbenzol, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

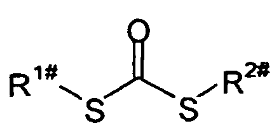 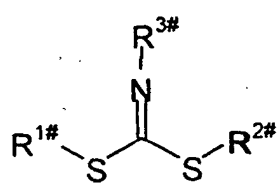

(III #) (IV #)

wobei $R^{3\#}$ ebenfalls unabhängig von $R^{1\#}$ und $R^{2\#}$ aus der oben aufgeführten Gruppe für diese Reste gewählt werden kann.

Beim konventionellen ‚RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (V #) oder (VI #) eingesetzt:

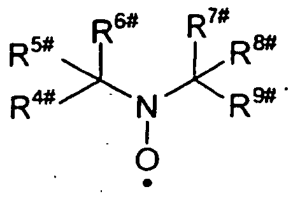

(V #)

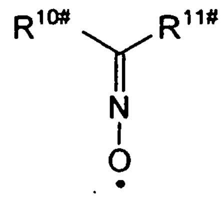

(VI #)

wobei $R^{4\#}$, $R^{5\#}$, $R^{6\#}$, $R^{7\#}$, $R^{8\#}$, $R^{9\#}$, $R^{10\#}$, $R^{11\#}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{12\#}$, Alkoxide $-OR^{13\#}$ und/oder Phosphonate $-PO(OR^{14\#})_2$,

wobei $R^{12\#}$, $R^{13\#}$ oder $R^{14\#}$ für Reste aus der Gruppe ii) stehen.

Verbindungen der Struktur (V #) oder (VI #) können auch an Polymerketten jeglicher Art gebunden sein (vorrangig in dem Sinne, dass zumindest einer der oben genannten Reste eine derartige Polymerkette darstellt).

Mehr bevorzugt eingesetzt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidyloxyl (TEMPO). 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Ein anderes vorteilhaftes Herstellungsverfahren für die Polyacrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im allgemeinen durch die Struktur $P_L$(A)-Me repräsentiert, wobei Me ein Metall der Gruppe I, wie z.B. Lithium, Natrium oder Kalium, und $P_L$(A) ein wachsender Polymerblock aus den Monomeren A ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Weiterentwicklung, z.B. zur Verbesserung der haftklebrigen Eigenschaften, können die radikalisch oder anionisch hergestellten Polymere mit Additiven versehen sein.

So können den Polyacrylathaftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt sein.

Zusätzlich können Vernetzer und Promotoren zur Vernetzung beigemischt werden. Geeignete Vernetzer für die UV-Vernetzung sind beispielsweise bi- oder multifunktionelle Acrylate und Methacrylate.

Für die Vernetzung mit UV-Licht können den Polyacrylathaftklebemassen freie UVabsorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Neben den oben erwähnten lassen sich weitere Photoinititatioren einsetzen. Hierzu gehören unter anderem solche vom Typ Norrish I oder Norrish II.

Die Photoinitiatoren können vorteilhaft folgende Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann.
Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Zur Herstellung von orientierten Haftklebemassen werden die oben beschriebenen Polymere bevorzugt als Hotmelt-Systeme beschichtet. Zur Entfernung des Lösemittels können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel (organisches Lösemittel und/oder Wasser) wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Der Hotmelt wird aus der Schmelze weiterverarbeitet.

Die Beschichtung selbst kann unterschiedlich durchgeführt werden. Sie kann dabei direkt auf einen Träger erfolgen, in alternativer Vorgehensweise kann aber auch auf eine andere (temporär vorliegende) Oberfläche beschichtet werden. Bei letzterer Vorgehensweise kann der Haftklebemassenfilm dann trägerlos weiterverarbeitet oder weiterverwendet oder auch auf einen letztendlich dauerhaft vorliegenden Träger umbeschichtet (z.B. umlaminiert) werden.

In einer bevorzugten Vorgehensweise wird direkt auf ein Trägermaterial (temporär oder dauerhaft) beschichtet. Als Trägermaterialien lassen sich prinzipiell alle dem Fachmann hierfür als geeignet bekannten Materialien verwenden, insbesondere z.B. BOPP, PET, Vlies, PVC, Schaum oder Trennpapiere (Glassine, HDPE, LDPE).
In bevorzugter Vorgehensweise wird die Orientierung der Haftklebemasse während des Beschichtungsverfahrens erzeugt. Alternativ kann die Orientierung aber auch nach der Beschichtung hervorgerufen werden, wobei insbesondere ein dehnbares Trägermaterial eingesetzt werden kann. Bei Ausdehnung des Trägermaterials wird die Haftklebemasse dann mit gereckt. Für diesen Fall lassen sich auch konventiolnell aus Lösung oder aus Wasser beschichtete Acrylathaftklebemassen einsetzen.

Zur Beschichtung als Hotmelt, insbesondere unter gleichzeitiger und/oder nachfolgender Orientierung der Haftklebemasse, lassen sich unterschiedliche Beschichtungsverfahren einsetzen.
In einer ersten Vorgehensweise werden die Haftklebemassen über Walzenbeschichtungsverfahren beschichtet und die Orientierung über einen Reckprozess erzeugt (vorteilhaftes Prinzip dabei: die Haftklebemasse wird zwischen zwei oder mehreren Walzen eines Mehrwalzenauftragswerk ausgewalzt und dann gegebenenfalls auf einen Träger aufgelegt, wobei die Walzen des Mehrwalzenauftragswerks unterschiedliche Drehgeschwindigkeiten aufweisen) Unterschiedliche Walzenbeschichtungsverfahren, die zur Beschichtung vorteilhaft herangezogen werden können, sind beispielsweise im "Handbook of Pressure Sensitive Adhesive Technology" von Donatas Satas (van Nostrand, New York 1989) beschrieben, hier sei insbesondere verwiesen auf die 3. Auflage; Kapitel 38.
In einer zweiten Vorgehensvariante wird die Orientierung durch Beschichtung über eine Schmelzdüse erreicht, wobei sowohl nach dem Kontaktverfahren als auch nach dem kontaktlosen Verfahren vorgegangen werden kann. Die Orientierung der Haftklebemasse kann hier zum einen durch das Düsendesign innerhalb der Beschichtungsdüse erzeugt werden, zum anderen wiederum durch einen Reckprozess nach dem Düsenaustritt. Die Orientierung lässt sich in weitem Umfang frei einstellen, das Reckverhältnis kann z.B. durch die Breite des Düsenspaltes gesteuert werden.
Eine vorteilhafte Reckung tritt auf, wenn die Schichtdicke des Haftklebefilmes auf dem zu beschichtenden Untergrund geringer ist als die Breite des Düsenspaltes.
In einem weiteren bevorzugten Verfahren wird die Orientierung durch eine Extrusionsbeschichtung erzielt. Die Extrusionsbeschichtung wird vorteilhaft mit einer Extrusionsdüse vorgenommen. Die verwendeten Extrusionsdüsen können dabei bevorzugt als T-Düse, Fischschwanz-Düse oder Bügel-Düse gewählt werden; die einzelnen Typen unterscheiden sich dabei durch die Gestalt ihres Fließkanals. Weiterhin kann hier - in Analogie zur Schmelzdüsenbeschichtung - ebenfalls eine Orientierung nach dem Düsenaustritt durch Reckung des Haftklebefilmes erzielt werden.
Zur Herstellung von orientierten Acrylathaftklebemassen wird bevorzugt mit einer Bügel-düse auf einen Träger beschichtet, und zwar derart, dass durch eine Relativbewegung von Düse zu Träger eine Polymerschicht auf dem Träger entsteht. Eine nachfolgende weiter Ausprägung der Orientierung durch eine Reckvorgang kann optional folgen.

Einen weiteren Einfluss auf die Ausprägung der Orientierung innerhalb der Acrylathaftklebemassen haben die Verfahrensparameter der Beschichtung. So kann die Orientierung beispielsweise durch die Düsen- und Beschichtungstemperatur, die Temperatur des zu beschichtenden Untergrundes sowie durch das Molekulargewicht der eingesetzten Polyacrylathaftklebemasse beeinflusst werden.
Wie bereits erwähnt, ist weiterhin das Verhältnis der Breite des Düsenspaltes zur Dicke des Haftklebefilmes von Relevanz für den Grad der Orientierung; der Grad der Orientierung ist dabei durch die Düsenspaltbreite frei einstellbar. Je dicker der Haftklebemassenfilm ist, der aus der Beschichtungsdüse herausgedrückt wird, desto stärker kann die Klebemasse bei der Auflage auf den zu beschichtenden Untergrund (beispielsweise ein Trägermaterial) gereckt werden, so dass ein dünnerer Haftklebemassenfilm entsteht. Dieser Reckungsvorgang kann außer durch die Wahl der

Breite des Düsenspaltes auch durch die Bahngeschwindigkeit des zu beschichtenden Untergrundes frei variiert werden.

Die besten Orientierungs-Effekte werden durch das Ablegen auf einer kalten Oberfläche erzielt. Daher sollte die zu beschichtende Oberfläche direkt gekühlt werden, ein zu beschichtendes Trägermaterial kann beispielsweise während der Beschichtung durch eine (Kühl-)Walze gekühlt werden. Die Kühlung der Walze kann durch einen Film eines Kontaktmediums (beispielsweise eine Flüssigkeit) von außen (z.B. durch Besprühung mit Wasser) oder von innen (innengekühlte Walze) oder durch ein kühlendes Gas erfolgen. Das kühlende Gas kann ebenfalls dazu eingesetzt werden, die aus der Beschichtungdüse austretende Haftklebemasse abzukühlen.

In vorteilhafter Weise wird die orientierte Haftklebemasse mittelbar oder unmittelbar auf eine mit einem Kontaktmedium versehene Walze beschichtet (unmittelbar: direkter Auftrag; mittelbar: zwischen der mit dem Kontaktmedium versehenen Walze und dem Haftklebefilm befindet sich beispielsweise noch ein Trägermaterial). Durch das Kontaktmedium kann die Haftklebemasse sehr schnell abgekühlt werden.

Bevorzugt wird die Walze hierzu mit dem Kontaktmedium benetzt, welches sich dann zwischen der Walze und dem Trägermaterial bzw. der Haftklebemasse befindet.

Vorteilhaft wird die Walze auf nicht mehr als Raumtemperatur, in sehr bevorzugter Weise auf Temperaturen unterhalb von 10 °C abgekühlt. Die Walze sollte rotieren.

Als Kontaktmedium wird bevorzugt ein Material verwendet, welches in der Lage ist, einen Kontakt zwischen dem Haftklebemassenfilm (bei unmittelbarer Auflage) bzw. dem Trägermaterial (besonders bei mittelbarer Auflage) und der Walzenoberfläche herzustellen Hierzu eignet sich insbesondere ein Material, welches die Hohlräume zwischen dem Haftklebemassenfilm bzw. dem Trägermaterial und der Walzenoberfläche (beispielsweise Unebenheiten in der Walzenoberfläche, Blasen) ausfüllt.

Hierfür bieten sich fließfähige Materialien an, welche in einem weiten Viskositätsbereich vorliegen können. So kann das Kontaktmedium beispielsweise aus einer Haftklebemasse oder einem anderen Material bestehen, welches auf die Walze oder das Trägermaterial auffließt und somit die Luft verdrängt.

Weiterhin können weiche, "anschmiegsame" Materialien als Kontaktmedium verwendet werden. So können beispielsweise weichelastische Materialien eingesetzt werden, wie z.B. Weichgummi, Weich-PVC, andere Weichkunststoffe und ähnliche Materialien.

Für Wasser als Kontaktmedium bieten sich als Zusätze beispielsweise Alkylalkohole wie Ethanol, Propanol, Butanol, Hexanol an, ohne sich durch diese Beispiele in der Auswahl der Alkohole einschränken zu wollen. Weiterhin sehr vorteilhaft sind insbesondere längerkettige Alkohole, Polyglykole, Ketone, Amine, Carboxylate, Sulfonate und dergleichen. Viele dieser Verbindungen senken die Oberflächenspannung oder erhöhen die Leitfähigkeit.

Eine Absenkung der Oberflächenspannung kann auch durch den Zusatz geringer Mengen an nichtionischen und/oder anionischen und/oder kationischen Tensiden zu dem Kontaktmedium erreicht werden. Im einfachsten Fall lassen sich hierzu kommerzielle Spülmittel oder Seifenlösungen verwenden, bevorzugt in einer Konzentration von einigen g/l in Wasser als Kontaktmedium. Besonders geeignet sind spezielle Tenside, welche auch bei geringer Konzentration eingesetzt werden können. Hierfür seien beispielsweise Sulfoniumtenside (z.B. β-Di(hydroxyalkyl)sulfoniumsalz), weiterhin beispielsweise ethoxylierte Nonylphenylsulfonsäureammoniumsalze oder Blockcopolymere, insbesondere Diblöcke. Hier sei insbesondere verwiesen auf den Stand der Technik unter "surfactants" in Ullmann's Encyclopedia of Industrial Chemistry, Sixth Edition, 2000 Electronic Release, Wiley-VCH, Weinheim 2000.

Als Kontaktmedien können die vorgenannten Flüssigkeiten auch ohne den Zusatz von Wasser jeweils für sich oder in Kombination miteinander eingesetzt werden.

Zur Verbesserung der Eigenschaften des Kontaktmediums (beispielsweise zur Erhöhung der Scherresistenz, Verringerung der Übertragung von Tensiden oder dergleichen auf die Lineroberfläche und damit verbesserte Reinigungsmöglichkeiten des Endproduktes) können dem Kontaktmedium und/oder den eingesetzten Zusatzstoffen weiterhin vorteilhaft Salze, Gele und ähnliche viskositätssteigernde Additive zugesetzt werden.

Des weiteren kann die Walze makroskopisch glatt oder eine gering strukturierte Oberfläche aufweisen. Es hat sich bewährt, wenn sie eine Oberflächenstruktur besitzt, insbesondere eine Aufrauhung der Oberfläche. Die Benetzung durch das Kontaktmedium kann dadurch verbessert werden.

Besonders gut läuft das Verfahren ab, wenn die Walze temperierbar ist, bevorzugt in einem Bereich von -30 °C bis 200°C, ganz besonders bevorzugt von 5°C bis 25°C.

Das Kontaktmedium wird bevorzugt auf die Walze aufgetragen werden, es ist aber auch möglich, dass es berührungslos aufgebracht wird, zum Beispiel durch Aufsprühen.

Zur Verhinderung der Korrosion ist die Walze gewöhnlich mit einer Schutzschicht überzogen. Diese wird bevorzugt so ausgewählt, dass sie von dem Kontaktmedium gut benetzt wird. Im allgemeinen ist die Oberfläche leitfähig. Es kann aber auch günstiger sein, sie mit einer oder mehreren Schichten aus isolierendem oder halbleitendem Material zu beschichten.

Für den Fall einer Flüssigkeit als Kontaktmedium kann man in hervorragender Weise vorgehen, wenn eine zweite Walze, vorteilhaft mit einer benetzbaren oder saugfähigen Oberfläche, durch ein Bad mit dem Kontaktmedium

läuft, dabei mit dem Kontaktmedium benetzt oder getränkt wird und durch Berührung mit der Walze einen Film dieses Kontaktmediums aufträgt bzw. aufstreicht.

Vorteilhaft wird die Haftklebemasse nach der Beschichtung und Ausbildung der Orientierung mit actinischer Strahlung vernetzt. Die Zeitdauer zwischen der Beschichtung und der Vernetzung ist in günstiger Weise gering. Vorteilhaft wird nach weniger als 60 Minuten nach der Beschichtung oder nach dem Einstellen der Orientierung vemetzt, bevorzugt nach weniger als 3 Minuten, sehr bevorzugt im in-line Verfahren nach weniger als 5 Sekunden. Durch den Abkühlvorgang nach der Beschichtung bildet sich sofort ein mikrophasensepariertes System aus, welches den Grad der Orientierung der Haftklebemassen erhält.

In bevorzugten Ausführungen der Erfindung wird mit UV-Strahlung oder mit Elektronenstrahlen vernetzt. Die Vernetzung erfolgt, je nach angewendetem Verfahren, auf dem Trägermaterial des Haftklebebandes oder auf der mit dem Kontaktmedium versehenden Walze. In einer bevorzugten Vorgehensweise findet der Vernetzungsprozess oder ein Teil des Vernetzungsprozesses im Bereich der vorstehend beschriebene mit dem Kontaktmedium versehenden Walze statt; dabei wird die orientierte Haftklebemasse günstigerweise anschließend auf ein Trägermaterial übertragen.

Zur UV-Vernetzung wird bevorzugt mittels kurzzeitiger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators angepasst.

Weiterhin ist es möglich, die Haftklebemasse mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Strahlungsdosen bewegen sich zwischen 5 bis 150 kGy, insbesondere zwischen 20 und 100 kGy.

Die entsprechend der erfindungsgemäßen Verwendung erzielten Haftklebemassen lassen sich hervorragend als Haftklebemassen für ein- oder beidseitige Haftklebebänder einsetzen.

***Experimente***

Die Erfindung wird im folgenden durch beispielhafte Experimente beschrieben, ohne sich durch deren Wahl unnötig beschränken zu wollen..

Folgende Testmethoden wurden zur Untersuchung der Haftklebemassen angewendet:

Testmethoden

180° Klebkrafttest (Test A)

Ein 20 mm breiter Streifen einer auf einen Polyesterträger oder silikonisiertem Trennpapier gecoateten Acrylathaftklebemasse wurde auf Stahlplatten aufgebracht, welche zuvor zweimal mit Aceton und einmal mit Isopropanol gewaschen wurden. Es wurden - je nach Richtung und Reckung - Längs oder Quermuster auf der Stahlplatte verklebt. Der Haftklebestreifen wurde zweimal mit einem 2 kg Gewicht auf das Substrat aufgedrückt. Das Klebeband wurde anschließend sofort mit 30 mm/min und im 180° Winkel vom Substrat abgezogen.
Die Messergebnisse sind in N/cm angegeben und sind gemittelt aus drei Messungen. Alle Messungen wurden bei Raumtemperatur unter klimatisierten Bedingungen durchgeführt.

Messung der Doppelbrechung (Test B)

Version 1

Ein Spektralphotometer Modell Uvikon 910 wurde im Probenstrahl mit zwei gekreuzten Polaroidfiltern versehen. Orientierte Acrylate wurden zwischen zwei Objektträgern fixiert. Die Schichtdicke der orientierten Probe wurde aus Vorversuchen mittels Dickentaster ermittelt. Die derart vorbereitete Probe wurde im Messstrahl des Spektralphotometers derart platziert, dass ihre Orientierungsrichtung um jeweils 45° von den optischen Achsen der beiden Polaroidfilter abwich. Mittels einer zeitaufgelösten Messung wurde dann die Transmission T über die Zeit verfolgt. Aus den Transmissionsdaten wurde dann die Doppelbrechung gemäß untenstehender Beziehungen ermittelt.

Version 2

Die Messung der Doppelbrechung erfolgte mit einem Versuchsaufbau, wie er analog in der Encyclopedia of Polymer Science, John Wiley & Sons, Vol. 10, S. 505, 1987 als Circular-Polariskop beschrieben ist. Das ausgesendete Licht eines diodengepumpten Festkörperlasers mit der Wellenlänge λ = 532 nm wird zunächst durch ein Polaroidfilter linear polarisiert und dann unter Verwendung einer λ/4-Platte mit λ = 532 nm zirkular polarisiert. Dieser derart polarisierte Laserstrahl wird sodann durch die orientierte Acrylatmasse geführt. Da Acrylatmassen hochtransparent sind, kann der Laserstrahl die Masse praktisch ungehindert passieren. Sind die Polymermoleküle der Acrylatmasse orientiert, so hat dies eine Änderung der Polarisierbarkeit der Acrylatmasse je nach Beobachtungswinkel zur Folge (Doppelbrechung). Der E-Vektor des zirkular polarisierten Laserstrahles erfährt durch diesen Effekt eine Drehung um die Fortschreitungsachse des Laserstrahles. Nach Verlassen der Probe wird der derart manipulierte Laserstrahl durch eine zweite λ/4-Platte mit λ = 532 nm geführt, deren optische Achse um 90° von der optischen Achse der ersten λ/4-Platte abweicht. Nach diesem Filter schließt sich ein zweiter Polaroidfilter an, der ebenfalls um 90° vom ersten Polaroidfilter abweicht. Schließlich wird die Intensität des Laserstrahles mit einem Photosensor vermessen und Δn gemäß untenstehender Zusammenhänge bestimmt.

Umrechnung

Die Transmission T berechnet sich nach:

$$T = sin^2(\pi x\ R).$$

Die Retardation R setzt sich wie folgt zusammen:

$$R = \frac{d}{\lambda}\Delta n\ .$$

Die Transmission setzt sich weiterhin aus T = $\frac{I_t}{I_0}$ zusammen. Somit ergibt sich letztendlich für die Doppelbrechung:

$$\Delta n = \frac{\lambda}{\pi d} \arcsin \sqrt{T}.$$

Dabei sind

$I_t$ = gemessene Intensität
$I_0$ = eingestrahlte Intensität
T = Transmission
d = Probendicke
λ = Wellenlänge
Δn = Doppelbrechung
R = Retardation

Bestimmung des Gelanteils (Test C)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert als prozentuale Angabe des Gewichtsanteil des Polymers, der nicht in Toluol löslich ist, bestimmt.

Messun des Rückschrumpfes (Test D)

Beschichtung: Die zu untersuchenden Haftklebemassen werden mit einem Masseauftrag von 50 g/$m^2$ trägerlos oder auf einen temporären Träger beschichtet. Dabei wird insbesondere wie weiter unten beschrieben (Abschnitte Beschichtung, UV-Vernetzung) vorgegangen.

Kontektionhierung. Die Haftklebemassen werden trägerlos konfektioniert, ein gegebenenfalls vorhandene temporäre Träger wird vor der Konfektionierung entfernt.

Parallel zur Beschichtungsrichtung des Hotmelts werden Streifen von mindestens 30 mm Breite und 20 cm Länge geschnitten. Bei Masseaufträgen von 50 g/$m^2$ werden 8 Streifen übereinander laminiert, um vergleichbare Schichtdikken zu erhalten. Der derart erhaltene Körper wird dann auf exakt 20 mm Breite geschnitten und an den jeweiligen Enden mit Papierstreifen überklebt, so dass der Bereich 'freier' Klebmasse zwischen den überklebten Enden des Streifens von 15 cm Länge verbleibt.
Messung:Der auf diese Weise präparierte Prüfkörper wird bei RT vertikal aufgehängt und die Änderung der Länge über die Zeit verfolgt, bis keine weitere Schrumpfung der Probe mehr festgestellt werden kann. Die um den Endwert reduzierte Ausgangslänge wird dann bezogen auf die Ausgangslänge als Rückschrumpf in Prozent angegeben.

Gelpermeationschromatographie GPC (Test E)

Die Bestimmung der mittleren Molekulargewichte $M_n$ und $M_w$ und der Polydisperistät PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

DSC

Glasübergangstemperaturen werden als Ergebnisse aus quasistatischen Verfahren wie z. B. Differential Scanning Calorimetry (DSC), konstante Aufheizrate 10 °C in 5 min, Schutzgasatmosphäre, angegeben.

**Rohstoffe:**

Als Makromonomer (B) wurde 2-Polystyrolethylmethacrylat (Chemlink® 4500 Macromer™ der Fa. Sartomer) eingesetzt. Das Molekulargewicht des Monomers beträgt 13.000 g/mol; das Makromonomer wird über anionische Polymerisation hergestellt. Der Refraktionsindex liegt bei 1,59 - 1,60.
VAZO 52® ist 2,2'-Azobis(2,4-Dimethylpentansäurenitril).

Beispiel 1

Ein für radikalische Polymerisationen konventioneller 10 L-Reaktor wurde mit 60 g Acrylsäure, 1,62 kg 2-Ethylhexylacrylat, 200 g Chemlink® 4500 Macromer™, 120 g N-Isopropylacrylamid und 500 g Ethylacetat befüllt. Nach 45 Minuten Durchleiten von Stickstoffgas unter Rühren wurde der Reaktor auf 70 °C hochgeheizt und 0,6 g 2,2'-Azoisobuttersäurenitril (AIBN) in 30 g Ethylacetat gelöst hinzugegeben. Anschließend wurde das äußere Heizbad auf 70 °C erwärmt und die Reaktion konstant bei dieser Außentemperatur durchgeführt. Nach 60 min. Reaktionszeit wurden 0,2 g Vazo 52® der Fa. DuPont in 10 g Ethylacetat gelöst hinzugegeben. Nach 90 min. Reaktionszeit wurden wiederum 0,2 g Vazo 52® der Fa. DuPont in 10 g Ethylacetat gelöst hinzugegeben, nach 2 h Reaktionszeit 0,4 g Vazo 52® der Fa. DuPont gelöst in 200 g Ethylacetat. Nach 3 h wurden 1,2 g 2,2'-Azoisobuttersäurenitril (AIBN) in 30 g Ethylacetat gelöst hinzugegeben. Nach 5 h wurde mit 400 g Ethylacetat verdünnt. Nach 5 h, 6 h und 7 h wurden jeweils 2 g Dicyclohexyldioxypercarbonat (Perkadox 16®, Fa. Akzo Nobel) gelöst in jeweils 50 g Ethylacetat hinzugegeben. Die Reaktion wurde nach 36 h Reaktionszeit durch Abkühlen auf Raumtemperatur abgebrochen. Nach Abkühlen wurden 10 g Isopropylthioxanthon (Speedcure ITX®, Fa. Rahn) hinzugeben und vollständig gelöst.

Beispiel 2

Ein für radikalische Polymerisationen konventioneller 10 L-Reaktor wurde mit 120 g Acrylsäure, 1,68 kg 2-Ethylhexylacrylat, 200 g Chemlink® 4500 Macromer™ und 500 g Ethylacetat befüllt. Nach 45 Minuten Durchleiten von Stickstoffgas unter Rühren wurde der Reaktor auf 70 °C hochgeheizt und 0,6 g 2,2'-Azoisobuttersäurenitril (AIBN) in 30 g Ethylacetat gelöst hinzugegeben. Anschließend wurde das äußere Heizbad auf 70 °C erwärmt und die Reaktion konstant bei dieser Außentemperatur durchgeführt. Nach 60 min. Reaktionszeit wurden 0,2 g Vazo 52® der Fa. DuPont in 10 g Ethylacetat gelöst hinzugegeben. Nach 2 h Reaktionszeit wurden 0,4 g Vazo 52® der Fa. DuPont gelöst in 200 g Ethylacetat zugegeben. Nach 3 h wurden 1,2 g 2,2'-Azoisobuttersäurenitril (AIBN) in 30 g Ethylacetat gelöst hinzugegeben. Nach 5 h wurde mit 400 g Ethylacetat verdünnt. Nach 5 h, 6 h und 7 h wurden jeweils 2 g Dicyclohexyldioxypercarbonat (Perkadox 16®, Fa. Akzo Nobel) gelöst in jeweils 50 g Ethylacetat hinzugegeben. Die Reaktion wurde nach 36 h Reaktionszeit durch Abkühlen auf Raumtemperatur abgebrochen.

Beispiel 3

Ein für radikalische Polymerisationen konventioneller 10 L-Reaktor wurde mit 30 g Acrylsäure, 1,77 kg 2-Ethylhexylacrylat, 200 g Chemlink® 4500 Macromer™ und 500 g Ethylacetat befüllt. Nach 45 Minuten Durchleiten von Stickstoffgas unter Rühren wurde der Reaktor auf 70 °C hochgeheizt und 0,6 g 2,2'-Azoisobuttersäurenitril (AIBN) in 30 g Ethylacetat gelöst hinzugegeben. Anschließend wurde das äußere Heizbad auf 70 °C erwärmt und die Reaktion konstant bei dieser Außentemperatur durchgeführt. Nach 60 min. Reaktionszeit wurden 0,2 g Vazo 52® der Fa. DuPont in 10 g Ethylacetat gelöst hinzugegeben. Nach 2 h Reaktionszeit wurden 0,4 g Vazo 52® der Fa. DuPont gelöst in 200 g Ethylacetat zugegeben. Nach 3 h wurden 1,2 g 2,2'-Azoisobuttersäurenitril (AIBN) in 30 g Ethylacetat gelöst hinzugegeben. Nach 5 h wurde mit 400 g Ethylacetat verdünnt. Nach 5 h, 6 h und 7 h wurden jeweils 2 g Dicyclohexyldioxypercarbonat (Perkadox 16®, Fa. Akzo Nobel) gelöst in jeweils 50 g Ethylacetat hinzugegeben. Die Reaktion wurde nach 36 h Reaktionszeit durch Abkühlen auf Raumtemperatur abgebrochen.

Beispiel 4

Das Polymer aus Beispiel 3 wurde in Lösung mit 30 Gew.-% eines C5-C9 Kohlenwasserstoffharzes (TK 90®, Firma VFT Rüttgers, Erweichungsbereich 88 - 90 °C) und mit 1 Gew.-% SR 610® (Fa, Cray Valley, Polyethylenglykoldiacrylat) abgemischt.

Beispiel 5

Ein für radikalische Polymerisationen konventioneller 10 L-Reaktor wurde mit 30 g Acrylsäure, 1,67 kg 2-Ethylhexylacrylat, 300 g Chemlink® 4500 Macromer™ und 500 g Ethylacetat befüllt. Nach 45 Minuten Durchleiten von Stickstoffgas unter Rühren wurde der Reaktor auf 70 °C hochgeheizt und 0,6 g 2,2'-Azoisobuttersäurenitril (AIBN) in 30 g Ethylacetat gelöst hinzugegeben. Anschließend wurde das äußere Heizbad auf 70 °C erwärmt und die Reaktion konstant bei dieser Außentemperatur durchgeführt. Nach 60 min. Reaktionszeit wurden 0,2 g Vazo 52® der Fa. DuPont in 10 g Ethylacetat gelöst hinzugegeben. Nach 2 h Reaktionszeit wurden 0,4 g Vazo 52® der Fa. DuPont gelöst in 200 g Ethylacetat zugegeben. Nach 3 h wurden 1,2 g 2,2'-Azoisobuttersäurenitril (AIBN) in 30 g Ethylacetat gelöst hinzugegeben. Nach 5 h wurde mit 400 g Ethylacetat verdünnt. Nach 5 h, 6 h und 7 h wurden jeweils 2 g Dicyclohexyldioxypercarbonat (Perkadox 16®, Fa. Akzo Nobel) gelöst in jeweils 50 g Ethylacetat hinzugegeben. Die Reaktion wurde nach 36 h Reaktionszeit durch Abkühlen auf Raumtemperatur abgebrochen.

Beschichtung

Die beschriebenen Beispiele wurden in einem Vakuum-Trockenschrank vom Lösemittel befreit. Es wurde ein Vakuum von 10 Torr angelegt und langsam auf 100 °C erhitzt. Der Schmelzhaftkleber wurde dann über eine Pröls-Schmelzdüse beschichtet. Die Beschichtungstemperatur betrug 160 °C. Es wurde mit 20 m/min auf ein silikonisiertes Trennpapier (Fa. Laufenberg) beschichtet. Die Düsenspaltbreite betrug 200 µm. Nach der Beschichtung betrug der Masseauftrag der Haftklebemasse auf dem Trennpapier 50 g/m$^2$. Zur Beschichtung wurde ein Druck von 6 bar auf die Schmelzdüse angelegt, damit die Schmelzhaftklebemasse durch die Düse gedrückt werden konnte.

UV-Vernetzung

Die UV-Vernetzung wurde, wenn nicht anders beschrieben, 5 Minuten nach der Beschichtung bei Raumtemperatur durchgeführt. Zur UV-Vernetzung wurde eine UV-Vernetzungsanlage der Fa. Eltosch eingesetzt. Als UV-Strahler wurde eine Quecksilber-Mitteldruckstrahler mit einer Intensität von 120 W/cm$^2$ eingesetzt. Die Bahngeschwindigkeit betrug 20 m/min; es wurde mit voller Strahlung vernetzt.
Zur Variation der UV-Bestrahlungsdosis wurden die Proen mit unterschiedlicher Anzahl der Bestrahlungsdurchgänge bestrahlt; die UV-Dosis steigt linear mit der Anzahl der Durchgänge an. Die UV-Dosen wurden mit dem Power-Puck® der Fa. Eltosch ermittelt. So wurde z.B. für 2 Durchgänge eine UV-Dosis von 0,8 J/cm$^2$ gemessen, für 4 Durchgänge von 1,6 J/cm$^2$, für 8 Durchgänge von 3,1 J/cm$^2$ und für 10 Durchgänge von 3,8 J/cm$^2$.

*Elektronenbestrahlung*

Die Elektronenbestrahlung erfolgte mit einem Gerät der Fa. Electron Crosslinking AB, Halmstad, Schweden. Das zu bestrahlende Trennpapier wurde dabei über eine standardmäßig vorhandene Temperierwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 m/min. Es wurde in allen Versuche

mit 180 kV Beschleunigungsspannung bestrahlt.

Resultate

Zur Untersuchung der Orientierung von Acrylathaftklebemassen und deren Vernetzbarkeit wurden zunächst verschiedene Acrylathaftklebemassen über freie radikalische Polymerisation hergestellt. Alle Klebemassen sind bezüglich Temperaturstabilität und Fließviskosität im Hotmelt-Prozess verarbeitbar. Die dargestellten Acrylathaftklebemassen wurden in unterschiedlichen Lösungsmittelgemischen polymerisiert. Zur Bestimmung der Polymereigenschaften nach der Polymerisation wurde zunächst Test E durchgeführt. Die Ergebnisse sind in Tabelle 1 zusammengefasst.

Tabelle 1:

| Molekulargewichte der Polymere in g/mol nach Test E | | |
|---|---|---|
| | $M_n$ | $M_W$ |
| Beispiel 1 | 212.000 | 970.000 |
| Beispiel 2 | 199.000 | 903.000 |
| Beispiel 3 | 202.000 | 946.000 |
| Beispiel 5 | 243.000 | 1.045.000 |

Bespiel 4 ist Tabelle 1 nicht aufgeführt, da bei diesem Versuch/Beispiel mit einem Harz modifiziert wurde.

Nach der Polymerisation wurden die Beispiele 1 bis 5 vom Lösemittel befreit und aus der Schmelze weiterverarbeitet. Es wurde über eine Schmelzdüse bei 160 °C beschichtet und auf ein bei Raumtemperatur belassenes Trennpapier beschichtet. Nach 15 Minuten wurde mit UV-Strahlung (Beispiel 1) oder mit Elektronenstrahlen (Beispiel 2 bis 5) vernetzt.

Zur Ermittlung der anisotropen Eigenschaften wurde zunächst der Rückschrumpf im freien Film nach Test D gemessen. Zur Bestimmung des Vernetzungsgrades wurde Test C durchgeführt und somit der Gelanteil bestimmt. Der Gelanteil gibt die prozentuale Menge des vernetzten Polymers an. Die Konstanz des Rückschrumpfes und somit der Orientierung wurde nach Test E ermittelt. Die Ergebnisse sind in Tabelle 2 zusammengefasst.

Tabelle 2:

| Beispiel | Anzahl der UV-Durchgänge | ES-Vernetzung Dosis in kGy | Rückschrumpf sofort (Test D) | Rückschrumpf nach 3 Monaten (Test D) | Gelwert in [%] nach Test C |
|---|---|---|---|---|---|
| 1 | 6 | - | 40% | 37% | 64 |
| 2 | - | 30 | 61% | 59% | 55 |
| 3 | - | 30 | 62% | 58% | 57 |
| 4 | - | 60 | 56% | 54% | 32 |
| 5 | - | 30 | 64% | 61% | 59 |

Der Tabelle 2 kann entnommen werden, dass alle Beispiele - unabhängig von der Art der Vernetzung oder Harzzusatz -einen Rückschrumpf besitzen. Ferner belegen die Ergebnisse aus Test D und Test E, dass der Rückschrumpf über einen sehr langen Zeitraum erhalten bleibt. In allen Fällen betrug die Abweichung weniger als 10 %.

Zur Bestätigung, dass es sich bei den hergestellten Beispielen 1 bis 5 um Haftklebemassen handelt, wurden die klebtechnischen Eigenschaften mittels Test A ermittelt. Die Ergebnisse sind in Tabelle 3 aufgelistet.

Tabelle 3

| | KK in [N/cm] nach Test A |
|---|---|
| Beispiel 1 | 3,8 |
| Beispiel 2 | 4,2 |
| Beispiel 3 | 4,0 |
| Beispiel 4 | 6,7 |

Tabelle 3 (fortgesetzt)

| | KK in [N/cm] nach Test A |
|---|---|
| Beispiel 5 | 4,0 |
| KK = Sofortklebkraft auf Stahl | |

**Patentansprüche**

1. Verwendung von Makromonomeren, welche

   - eine Glasübergangstemperatur von mindestens 20 °C aufweisen,
   - zumindest eine oligomere und/oder polymere Struktureinheit aufweisen, welche mit Polyacrylaten nicht verträglich ist, und
   - zumindest eine polymerisierbare Doppelbindung in Form einer Vinyl-, Acrylat- und/oder Methacrylateinheit aufweisen,

   als Comonomere bei der Herstellung von orientierten Polyacrylathaftklebemassen.

2. Verwendung nach Anspruch 1, **dadurch gekennzeichnet, dass** die oligomere bzw. polymere Struktureinheit inert gegen eine radikalische Polymerisation ist.

3. Verwendung nach Anspruch 1, **dadurch gekennzeichnet, dass** die oligomere bzw. polymere Struktureinheit inert gegen eine anionische Polymerisation ist.

4. Verwendung nach zumindest einem der vorangehenden Ansprüche, **dadurch gekennzeichnet, dass** die orientierten Polyacrylathaftklebemassen eine Vorzugsrichtung derart aufweisen, dass der in Vorzugsrichtung gemessene Brechungsindex $n_{MD}$ größer ist als der in einer Richtung senkrecht zur Vorzugsrichtung gemessene Brechungsindex $n_{CD}$, wobei die Differenz An = $n_{MD}$ - $n_{CD}$ bevorzugt mindestens $1 \cdot 10^{-6}$ beträgt.

5. Verwendung nach zumindest einem der vorangehenden Ansprüche, **dadurch gekennzeichnet, dass** die orientierten Haftklebemassen unmittelbar nach ihrer Herstellung ein Rückschrumpfverhalten von mindestens 3 % im freien Film aufweisen, bestimmt gemäß Test D.

6. Verwendung nach zumindest einem der vorangehenden Ansprüche, **dadurch gekennzeichnet, dass** die orientierten Haftklebemassen 3 Monate nach ihrer Herstellung - bei einer zwischenzeitlichen Lagerung bei 23 °C und 50 % rel. Luftfeuchte - ein Rückschrumpfverhalten von mindestens 3 % im freien Film aufweisen, bestimmt gemäß Test D.

7. Verfahren zur Herstellung von orientierten Polyacrylathaftklebemassen durch Polymerisation einer Monomermischung, wobei Makromonomere gemäß einem der Ansprüche 1 bis 3 als Comonomere eingesetzt werden, **dadurch gekennzeichnet, dass** der Anteil der Makromonomere in der Monomermischung bis zu 40 Gew.-%, insbesondere bis zu 30 Gew.-% beträgt.

8. Verfahren nach Anspruch 7, **dadurch gekennzeichnet, dass** als Makromonomere acrylat- und/oder methacrylatfunktionalisierte Polystyrole und/oder Poly-α-methylstyrole eingesetzt werden, welche insbesondere durch die folgende allgemeine Formel wiedergegeben werden können:

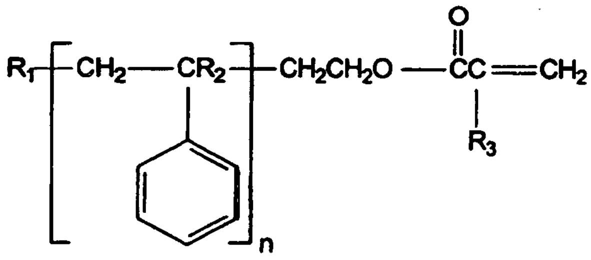

wobei unabhängig voneinander

$R_1$ = ein vom Polymerisationsinitiator verbleibender Rest, bevorzugt ein (ggf. verzweigter) Alkylrest, beispielsweise $CH_3CH_2C(CH_3)H$
$R_2$ = H oder $CH_3$
$R_3$ = H oder $CH_3$
n = 20 bis 350, insbesondere 45 bis 250

ist.

**Claims**

**1.** Use of macromonomers which

- have a glass transition temperature of at least 20°C,
- have at least one oligomeric and/or polymeric structural unit which is incompatible with polyacrylates, and
- have at least one polymerizable double bond in the form of a vinyl, acrylate and/or methacrylate unit

as comonomers in the preparation of oriented polyacrylate pressure sensitive adhesives.

**2.** Use according to Claim 1, **characterized in that** the oligomeric or polymeric structural unit is inert to a radical polymerization.

**3.** Use according to Claim 1, **characterized in that** the oligomeric or polymeric structural unit is inert to an anionic polymerization.

**4.** Use according to at least one of the preceding claims, **characterized in that** the oriented polyacrylate PSAs advantageously have a preferential direction such that the refractive index measured in the preferential direction, $n_{MD}$, is greater than the refractive index measured in a direction perpendicular to the preferential direction, $n_{CD}$, with the difference $\Delta n = n_{MD} - n_{CD}$ being preferably at least $1 \cdot 10^{-6}$.

**5.** Use according to at least one of the preceding claims, **characterized in that** the oriented pressure sensitive adhesives immediately after their preparation exhibit a shrinkback of at least 3% in the free film, determined in accordance with Test D.

**6.** Use according to at least one of the preceding claims, **characterized in that**, 3 months after their preparation, with storage at 23°C and 50% relative humidity during that time, the oriented pressure sensitive adhesives exhibit a shrinkback of at least 3% in the free film, determined in accordance with Test D.

**7.** Process for the preparation of oriented polyacrylate pressure sensitive adhesives by polymerization of a monomer mixture, using macromonomers according to one of Claims 1 to 3 as comonomers, **characterized in that** the fraction of the macromonomers in the monomer mixture is up to 40% by weight, in particular up to 30% by weight.

**8.** Process according to Claim 7, **characterized in that**, as macromonomers, acrylate- and/or methacrylate-functionalized polystyrenes and/or poly-α-methylstyrenes are

used which can be represented in particular by the following general formula:

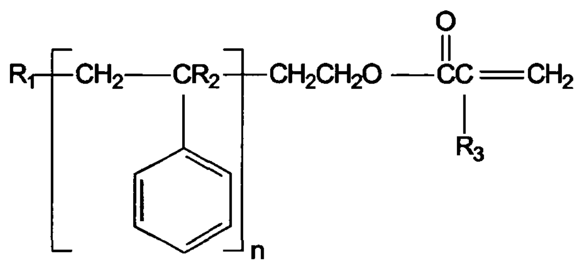

in which, independently of one another,

$R_1$ = a radical which is a residue of the polymerization initiator, preferably an (optionally branched) alkyl radical, for example, $CH_3CH_2C(CH_3)H$
$R_2$ = H or $CH_3$
$R_3$ = H or $CH_3$
n = 20 to 350, especially 45 to 250.

**Revendications**

1. Utilisation de macromonomères qui présentent

- une température de transition vitreuse d'au moins 20°C,
- au moins une unité de structure oligomère et/ou polymère qui n'est pas compatible avec les polyacrylates et
- au moins une double liaison polymérisable sous forme d'une unité vinyle, acrylate et/ou méthacrylate comme comonomères lors de la préparation de masses auto-adhésives orientées de polyacrylate.

2. Utilisation selon la revendication 1, **caractérisée en ce que** l'unité de structure oligomère ou polymère est inerte par rapport à une polymérisation radicalaire.

3. Utilisation selon la revendication 1, **caractérisée en ce que** l'unité de structure oligomère ou polymère est inerte par rapport à la polymérisation anionique.

4. Utilisation selon au moins l'une quelconque des revendications précédentes, **caractérisée en ce que** les masses auto-adhésives de polyacrylate orientées présentent une direction préférentielle telle que l'indice de réfraction mesuré dans le sens préférentiel $n_{MD}$ est supérieur à l'indice de réfraction $n_{CD}$ mesuré dans une direction perpendiculaire à la direction préférentielle, la différence $\Delta n = n_{MD} - n_{CD}$ étant de préférence d'au moins $1.10^{-6}$.

5. Utilisation selon au moins l'une quelconque des revendications précédentes, **caractérisée en ce que** les masses auto-adhésives orientées présentent, immédiatement après leur préparation, un comportement de retrait d'au moins 3% dans le film libre, déterminé selon le Test D.

6. Utilisation selon au moins l'une quelconque des revendications précédentes, **caractérisée en ce que** les masses auto-adhésives orientées présentent, 3 mois après leur préparation - en les entreposant pendant ce temps à 23°C et 50% d'humidité relative - un comportement de retrait d'au moins 3% dans le film libre, déterminé selon le Test D.

7. Procédé pour la préparation de masses auto-adhésives orientées de polyacrylate par polymérisation d'un mélange de monomères, en utilisant des macromonomères selon l'une quelconque des revendications 1 à 3 comme comonomères, **caractérisé en ce que** la proportion des macromonomères dans le mélange de monomères représente jusqu'à 40% en poids, en particulier jusqu'à 30% en poids.

8. Procédé selon la revendication 7, **caractérisé en ce qu'**on utilise comme macromonomères des polystyrènes et/ou des poly-α-méthylstyrènes fonctionnalisés par acrylate et/ou méthacrylate, qui peuvent en particulier être représentés par la formule générale suivante :

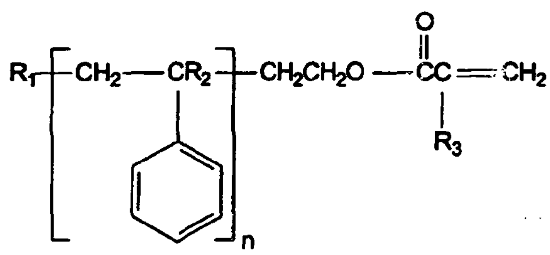

dans laquelle, indépendamment 1 un de l'autre,

$R_1$ = un radical restant de l'initiateur de polymérisation, de préférence un radical alkyle (le cas échéant ramifié), par exemple $CH_3CH_2C(CH_3)H$
$R_2$ = H ou $CH_3$
$R_3$ = H ou $CH_3$
n = 20 à 350, en particulier 45 à 250.